# EUROPÄISCHE PATENTSCHRIFT

(11) **EP 3 291 028 B1**
(45) Veröffentlichungstag und Bekanntmachung des Hinweises auf die Patenterteilung: **13.03.2024**
(21) Anmeldenummer: 17185414.4
(22) Anmeldetag: 08.08.2017
(51) Int. Cl.: G05B 9/02, B66F 9/07

(54) **LAGERBEDIENGERÄT UND VERFAHREN ZUR STEUERUNG EINES LAGERBEDIENGERÄTS**
STORAGE HANDLING DEVICE AND METHOD FOR CONTROLLING THE STORAGE HANDLING DEVICE
TRANSSTOCKEUR ET PROCÉDÉ DE FONCTIONNEMENT D'UN TRANSSTOCKEUR

(30) Priorität: 29.08.2016 DE 102016010327
(43) Veröffentlichungstag der Anmeldung: 07.03.2018
(73) Patentinhaber: Lenze Drives GmbH, 32699 Extertal (DE)
(72) Erfinder: Nottbrock, Thomas, 32758 Detmold (DE)
(74) Vertreter: Schober, Mirko

(56) Entgegenhaltungen:
- DE-A1-102014 220 165
- US-A- 5 917 297
- US-A1- 2013 151 199

## Beschreibung

Die Erfindung betrifft ein Lagerbediengerät sowie ein Verfahren zur Steuerung eines Lagerbediengeräts nach den Oberbegriffen der unabhängigen Ansprüche.

Lagerbediengeräte der in Rede stehenden Art sind Vorrichtungen, die dem Ein- oder Auslagern von Waren in Lagereinrichtungen dienen. Die Lagerbediengeräte werden hierbei regelmäßig fest in den Lagern installiert und weisen sowohl ortsfest installierte Bestandteile, wie beispielsweise Schienensysteme, sowie bewegliche Bestandteile, wie beispielsweise Manipulatoren zum Aufnehmen der ein- und/oder auszulagernden Waren auf. Lagerbediengeräte der in Rede stehenden Art werden aus einem fest installierten Energieversorgungsnetz mit elektrischer Energie versorgt. Abhängig von der konstruktiven Ausgestaltung weisen diese Lagerbediengeräte einen Antrieb oder eine Mehrzahl Antriebe auf, welche die Bewegungen des Lagerbediengeräts bewirken. Die Energieversorgung dieser Antriebe aus dem Energieversorgungsnetz erfolgt hierbei regelmäßig über Umrichter. Diese Umrichter weisen einen elektrischen Zwischenkreis auf, der beim Betrieb des Lagerbediengeräts eine elektrische Gleichspannung, die Zwischenkreisspannung, aufweist.

Bei Lagerbediengeräten der in Rede stehenden Art ist es insbesondere aus sicherheitstechnischen Gründen notwendig, die Bewegungen des Lagerbediengeräts zu stoppen, wenn es zu einem Ausfall der elektrischen Energieversorgung durch das Energieversorgungsnetz kommt. Hierfür werden regelmäßig elektromechanische Bremsen verwendet, die beim Ausfall der Energieversorgung die Bewegung des Lagerbediengeräts bremsen und dieses vorzugsweise nach dem Abbremsen in seiner aktuellen Position fixieren. Vorzugsweise kommen hierbei Bremsen zum Einsatz, die derart gestaltet sind, dass sie beim Ausfallen ihre Energieversorgung schließen. Auf diese Weise ist sichergestellt, dass es beim Ausfall der Energieversorgung zu einem Stillstand des Lagerbediengeräts kommt.

Die hierbei auftretenden Abbremsvorgänge sind jedoch vergleichsweise abrupt und führen so zu einem erhöhten Verschleiß der Bremsen und anderer mechanischen Komponenten des Lagerbediengeräts, wie beispielsweise Laufrollen oder Antriebsräder, oder anderer Bestandteile des Lagerbediengeräts. Im ungünstigsten Fall kann es so zur Beschädigung des Lagerbediengeräts kommen.

Um dies zu vermeiden, ist es daher aus dem Stand der Technik bekannt, Lagerbediengeräte der in Rede stehenden Art mit einer Steuereinrichtung zu versehen, die in der Lage ist, einen Netzausfall zu erkennen und auf diesen zu reagieren. Eine solche Steuereinrichtung kann im Falle eines Netzausfalls ein sogenanntes geführtes Stillsetzen des Lagerbediengeräts bewirken, d.h. ein kontrolliertes Abbremsen des Lagerbediengeräts herbeiführen. Hierbei werden regelmäßig die Antriebe benutzt, um die Bewegungen des Lagerbediengeräts abzubremsen, so dass die Bremsen des Lagerbediengeräts erst geschlossen werden müssen, wenn das Lagerbediengerät bzw. die Antriebe des Lagerbediengeräts eine niedrige Geschwindigkeit erreicht haben bzw. ganz zum Stillstand gekommen sind.

Um ein solches geführtes Stillsetzen zu bewirken, wird jedoch für die Dauer dieses Vorgangs weiterhin elektrische Energie zur Versorgung des Antriebs benötigt. Nach dem Stand der Technik kann diese zur Verfügung gestellt werden, indem das Lagerbediengerät mit entsprechenden Energiespeichereinrichtungen ausgestattet wird, welche die üblicherweise auftretende schlagartige Leerung des Zwischenkreises verhindern, so dass weiterhin Energie für die Antriebe zur Verfügung steht. Die DE 10 2014 220 165 A1 offenbart hierfür mit dem elektrischen Zwischenkreis verbundene Energiespeicher in Form von sogenannten Superkondensatoren.

Der Nachteil einer derartigen Lösung sind die hohen Kosten, die durch den Einsatz derartiger Energiespeicher verursacht werden. Verursacht werden diese zum einen durch die Kondensatoren selbst, zum anderen durch die zusätzliche Leistungselektronik, die durch den Einsatz derartiger Superkondensatoren notwendig wird.

US 5 917 297 A offenbart eine Anordnung und ein Verfahren zum Betrieb einer magnetisch aufgehängten, elektromotorischen Antriebsvorrichtung im Falle einer Netzstörung, die in wirtschaftlich vorteilhafterer Weise ausgeführt wird. Bei dieser Anordnung wird ein Netzausfall des Energieversorgungsnetzes anhand der Spannung des Zwischenkreises erkannt und darauf hin in einen generatorischen Betrieb umgeschaltet.

Der Erfindung liegt daher die Aufgabe zugrunde, ein Lagerbediengerät und ein Verfahren zur Steuerung eines Lagerbediengeräts aufzuzeigen, die ein geführtes Stillsetzen des Lagerbediengeräts bei einem Ausfall eines elektrischen Energieversorgungsnetzes zu geringeren Kosten ermöglichen, als dies im Stand der Technik der Fall ist.

Die Aufgabe wird gelöst durch ein Lagerbediengerät und ein Verfahren zur Steuerung des Lagerbediengeräts mit den Merkmalen der unabhängigen Ansprüche. Die Merkmale der abhängigen Ansprüche betreffen vorteilhafte Ausführungsformen.

Erfindungsgemäß wird die Aufgabe dadurch gelöst, dass das Lagerbediengerät eine Steuereinrichtung aufweist, die zum Erkennen eines Netzausfalls Mittel zur Überwachung der Spannung im Zwischenkreis aufweist. Nach dem erfindungsgemäßen Verfahren überwacht die Steuereinrichtung die Spannung des Zwischenkreises des Umrichters und nutzt diese zur Erkennung von Netzausfällen.

Es hat sich überraschenderweise gezeigt, dass der schlagartige Abfall der Spannung im Zwischenkreis als Indikator genutzt werden kann, der es ermöglicht, derart schnell auf einen Netzausfall zu reagieren, dass es möglich ist, ein geführtes Stillsetzen, insbesondere unter Nutzung einer generatorischen Betriebsweise des Antriebs, zu ermöglichen, ohne den Antrieb weiterhin mit elektrischer Energie versorgen zu müssen.

Die Leerung des Zwischenkreises erfolgt bei Ausfall des Energieversorgungsnetzes nach dem Stand der Technik normalerweise innerhalb weniger Millisekunden. Für das erfindungsgemäße Verfahren ist daher eine schnelle Erkennung des Netzausfalls und eine schnelle Reaktion auf diesen Netzausfall wesentlich, insbesondere um die vollständige Leerung des Zwischenkreises und damit den Verlust der Führung der Antriebe zu verhindern.

Die Erkennung des Netzausfalls erfolgt in vorteilhafter Weise dadurch, dass zur Erkennung eines Netzausfalls die Unterschreitung eines Schwellenwerts durch die Zwischenkreisspannung genutzt wird. Hierfür ist die möglichst genaue Kenntnis des momentanen Werts der Zwischenkreisspannung von Vorteil, d.h. es wird vorzugsweise eine ungeglättete Ist-Spannung im Zwischenkreis gemessen und mit dem Schwellenwert verglichen. Wird der Schwellenwert unterschritten, wird dies durch die Steuereinrichtung als Netzausfall gewertet und die entsprechende vorgegebene Reaktion der Steuereinrichtung auf den Netzausfall ausgelöst.

Die Art und Weise der Reaktion auf den erkannten Netzausfall hängt dabei vorzugsweise vom jeweiligen Betriebszustand des Lagerbediengeräts bzw. des jeweiligen Antriebs des Lagerbediengeräts ab. Grundsätzlich kann sich das Lagerbediengerät bzw. der jeweilige Antrieb in einer Betriebsweise befinden, in der elektrische Energie in mechanische Energie umgewandelt wird (motorische Betriebsweise).

Wird ein Antrieb jedoch zum Abbremsen des Lagerbediengeräts benutzt, so wandelt er mechanische Energie in elektrische Energie um (generatorische Betriebsweise).

Darüber hinaus existieren Betriebszustände, in denen sich der Betrieb im sogenannten Lagerregelungsbetrieb befindet, d.h. durch Aufbringen eines Antriebsmoments eine bestimmte Position des Lagerbediengeräts aufrechterhalten wird, wobei der Lagerantrieb ebenfalls eine gewisse Menge elektrischer Energie benötigt. Diese Betriebsphase ist jedoch im Hinblick auf das Stillsetzen vergleichsweise unkritisch, da hier aufgrund des Fehlens der zunächst abzubremsenden Bewegung das Einfallen der Bremse des Lagerbediengeräts unmittelbar ausgelöst werden kann, ohne dass die eingangs beschriebenen nachteiligen Effekte durch das Abbremsen der Bewegung des Lagerbediengeräts auftreten.

Als Schwellenwert dient bevorzugt ein vorgegebener Bruchteil, beispielsweise 95 %, einer Referenzspannung, die bevorzugt durch die Steuereinrichtung während des Betriebs des Lagerbediengeräts fortlaufend ermittelt wird. Die Ermittlung der Referenzspannung erfolgt vorzugsweise ebenfalls aus der Spannung des Zwischenkreises. Diese wird hierfür bevorzugt geglättet, beispielsweise durch die Verwendung eines Pt1-Filters. Die Glättung erfolgt bevorzugt durch ein Verzögerungsglied, insbesondere erster Ordnung, dessen Zeitkonstanten idealerweise so gewählt werden, dass die geglättete Referenzspannung den in der Praxis vorkommenden Schwankungen der Netzspannung und den durch diese verursachten Schwankungen der Spannung des Zwischenkreises folgen kann, während die abrupten Abfälle der Zwischenkreisspannung durch Netzausfälle zumindest bis zum Erkennen des Netzausfalls weitestgehend ohne Auswirkung auf die Referenzspannung bleiben.

Es ist zudem von Vorteil, die Referenzspannung auf eine obere Grenzreferenzspannung zu begrenzen. Wenn sich der Antrieb in der generatorischen Betriebsphase befindet, ist es möglich, dass die Zwischenkreisspannung die durch das Energieversorgungsnetz erzeugbare Zwischenkreisspannung überschreitet. In diesem Zusammenhang sind Betriebszustände möglich, in denen die Zwischenkreisspannung von einer solchen überhöhten Zwischenkreisspannung wieder auf die vom Netz vorgegebene Zwischenkreisspannung, beispielsweise nach einer generatorischen Abbremsung einer Bewegung durch den Antrieb, zurückfällt, ohne dass ein Netzausfall vorliegt. Die Begrenzung der Referenzspannung auf eine geeignete Grenzreferenzspannung kann in solchen Betriebszuständen die irrtümliche Erkennung von Netzausfällen verhindern.

Vorteilhafterweise erfolgt die Reaktion der Steuereinrichtung beim Erkennen eines Netzausfalls insbesondere in einer motorischen Betriebsphase des Antriebs dadurch, dass die Steuereinrichtung das Lagerbediengerät in eine generatorische Betriebsphase des Antriebs umsteuert. Diese Umsteuerung in die generatorische Betriebsphase hat zum einen den Vorteil, dass durch die generatorische Betriebsweise des Antriebs ein Abbremsen der Bewegung des Lagerbediengeräts über den Antrieb erfolgen kann. Insbesondere im Hinblick auf die vorliegende Erfindung hat es jedoch den Vorteil, dass der Einbruch der Zwischenkreisspannung und dessen Leerung verhindert wird, da der Zwischenkreis nun durch die vom Antrieb erzeugte elektrische Energie gespeist werden kann.

Erfindungsgemäß erfolgt die Umsteuerung hierbei auf schnellstmöglichem Weg, d.h. insbesondere, dass eine Drehzahlregelung des Antriebs, welche auf der Vorgabe und Einregelung von Drehzahlsollwerten beruht, zumindest weitestgehend umgangen wird und stattdessen erfindungsgemäß ein Vorsteuerwert für das Antriebsmoment unmittelbar eingestellt wird. Dieser Vorsteuerwert kann beispielsweise in einem Datenspeicher der entsprechend programmierten Steuereinrichtung abgelegt werden und bei einem Netzausfall durch die Steuereinrichtung abgerufen und direkt, also insbesondere unter Umgehung eines etwaigen Regelkreises, eingestellt werden. Auf diese Weise können vergleichsweise zeitintensive Regelvorgänge umgangen werden.

Hierbei ist es zum einen möglich, das Motormoment zunächst auf Null zu setzen, so dass der Antrieb aufgrund der Trägheit der Bewegung unmittelbar in den generatorischen Betrieb übergeht, es kann auch für eine noch schnellere und wirkungsvollere Auslösung des Umsteuervorgangs unmittelbar ein Startwert für ein generatorisches Antriebsmoment eingestellt werden. Hierbei ist es vorteilhaft, kurzzeitig einen überhöhten Wert für das generatorische Antriebsmoment einzustellen, der anschließend zunächst wieder abgesenkt wird (Drehmoment-Boost).

Es versteht sich in diesem Zusammenhang, dass das vorstehend beschriebene Umsteuern von einer motorischen in eine generatorische Betriebsphase dann entfallen kann, wenn der Netzausfall während einer generatorischen Betriebsphase des Antriebs stattfindet. Während einer solchen generatorischen Betriebsphase und/oder nach dem Umsteuern in eine generatorische Betriebsphase nach der Erkennung eines Netzausfalls führt die Steuereinrichtung bevorzugt ein Abbremsen der Bewegung des Lagerbediengeräts durch den Antrieb durch.

Für das Abbremsen durch den generatorischen Betrieb des Antriebs ist es von Vorteil, wenn das - in diesem Fall bremsend wirkende - Antriebsmoment zeitabhängig ansteigt, beispielsweise in einer Rampe gesteigert wird. Diese kann ebenfalls durch einen vorgegebenen Verlauf gespeicherter Steuerwerte, die von der Steuereinrichtung an den Antrieb weitergegeben werden, realisiert sein. Alternativ kann es auch möglich sein, für die Steuerung dieser Abbremsphase auf eine gegebenenfalls zuvor, insbesondere während des Umsteuervorgangs, umgangene Regelung, insbesondere Drehzahlregelung, zurückzugreifen.

Es kann von Vorteil sein, die vom Antrieb generatorisch erzeugte Energie, die an den Zwischenkreis abgegeben wird, zu nutzen, um die Energieversorgung der Steuereinrichtung und/ oder vorzugsweise der elektromechanischen Bremse des Lagerbediengeräts mit Spannung zu versorgen. Hierfür weist das Lagerbediengerät vorzugsweise eine aus dem Zwischenkreis gespeiste Energieversorgungseinrichtung auf. Bei dieser kann es sich beispielsweise um ein Weitbereichsnetzteil handeln, welches Steuereinrichtung und/oder Bremsen des Lagerbediengeräts so bis zum Ende des geführten Stillsetzens des Lagerbediengeräts mit der benötigten Energie versorgen kann.

Ebenfalls ist die Installation einer konventionellen unterbrechungsfreien Spannungsversorgung, insbesondere im ortsfesten Teil des Lagerbediengeräts, von Vorteil. Ebenfalls von Vorteil ist ein Bremswiderstand, um beim generatorischen Betrieb der Antriebe erzeugte überschüssige elektrische Energie in Wärmeenergie umzuwandeln, wenn eine Rückspeisung dieser elektrischen Energie bei einem Netzausfall nicht mehr möglich ist.

Die Steuereinrichtung ist bevorzugt derart ausgebildet, dass sie die Bremse des Lagerbediengeräts nach dem Erkennen eines Netzausfalls aktiviert, d.h. insbesondere schließt, sobald eine vorgebbare Grenzgeschwindigkeit des Lagerbediengeräts unterschritten wird. Im Hinblick auf ein besonders sanftes Abbremsen des Lagerbediengeräts ist es von besonderem Vorteil, wenn die Bremse beim Erreichen des Stillstands der von dem Antrieb im generatorischen Betrieb abgebremsten Bewegung einfällt. Praktisch reicht hier jedoch gegebenenfalls bereits die Unterschreitung einer bestimmten Grenzgeschwindigkeit aus, unterhalb der ein abruptes Abbremsen der Restbewegung durch die einfallende Bremse als unkritisch im Hinblick auf die mechanischen Belastungen des Lagerbediengeräts angesehen werden kann. Erfolgt die Erkennung des Netzausfalls im Lagerregelbetrieb, d.h. wenn das Lagerbediengerät durch den Antrieb in einer bestimmten Position gehalten wird, so wird die Bremse von der Steuereinrichtung vorteilhafterweise unmittelbar aktiviert, um das Lagerbediengerät in eben dieser Position sofort stillzusetzen. Ein leichtes "Absacken" des vom Antrieb ggf. gehaltenen Lagerbediengeräts bis zum endgültigen Stopp durch die Bremse kann hierbei in Kauf genommen werden.

Auf die vorstehend beschriebene Weise ist es nun möglich, das Lagerbediengerät geführt stillzusetzen, ohne dass es kostenintensiver Energiespeichereinrichtungen zur Versorgung der Antriebe selber bedarf. Die vorteilhafterweise gegebenenfalls vorgesehenen Energiespeichereinrichtungen, insbesondere eine gegebenenfalls vorhandene unterbrechungsfreie Spannungsversorgung, müssen lediglich die für die Steuerung der Antriebe notwendigen Hilfssysteme, d.h. die Steuereinrichtung selbst, die elektromechanische Bremse sowie gegebenenfalls vorhandene speicherprogrammierbare Steuerungen, Sicherheits- und oder Feldbussysteme etc. bis zum endgültigen Stillstand des Lagerbediengeräts mit Energie versorgen können. Hierfür ist jedoch nur ein Bruchteil der elektrischen Leistung erforderlich, die nach dem eingangs beschriebenen Stand der Technik notwendig wäre, um auch die Antriebe selbst mit der benötigten elektrischen Energie zu versorgen. Insbesondere bedeutet dies, dass lediglich kleindimensionierte und kostengünstige Komponenten, wie beispielsweise eine unterbrechungsfreie Spannungsversorgung mit 24 V benötigt werden, während kostenintensive Einrichtungen für die Bereitstellung hoher elektrischer Leistungen, wie beispielsweise die eingangs beschriebenen Superkondensatoren, entfallen können.

Die Erfindung wird im Folgenden anhand der Fig. 1 bis 3 schematisch näher erläutert.
Fig. 1 zeigt beispielhafte gemessene Verläufe von Antriebsmoment, Zwischenkreisspannung und Bewegungsgeschwindigkeit eines beispielhaften Lagerbediengeräts nach dem Stand der Technik im Fall eines Netzausfalls.
Fig. 2 zeigt entsprechende Messdaten bei der Durchführung eines erfindungsgemäßen Verfahrens zur Steuerung des Lagerbediengeräts.
Fig. 3 zeigt entsprechende Messdaten bei der Durchführung eines alternativen erfindungsgemäßen Verfahrens mit einem kurzzeitig überhöhten Vorsteuerwert für das Antriebsmoment.

In den in den Figuren dargestellten Messungen sind die Messwerte als dimensionslose Relativwerte eines jeweiligen Referenzwerts angegeben. Die absoluten Messwerte sind für das Verständnis der vorliegenden Erfindung nicht wesentlich. Daher wurden für die einzelnen gemessenen Parameter mit entsprechenden Referenzwerten relative Messwerte gebildet, um die einzelnen Datenverläufe grafisch in sinnvoller Weise mit einer gemeinsamen Skalierung darstellen zu können.

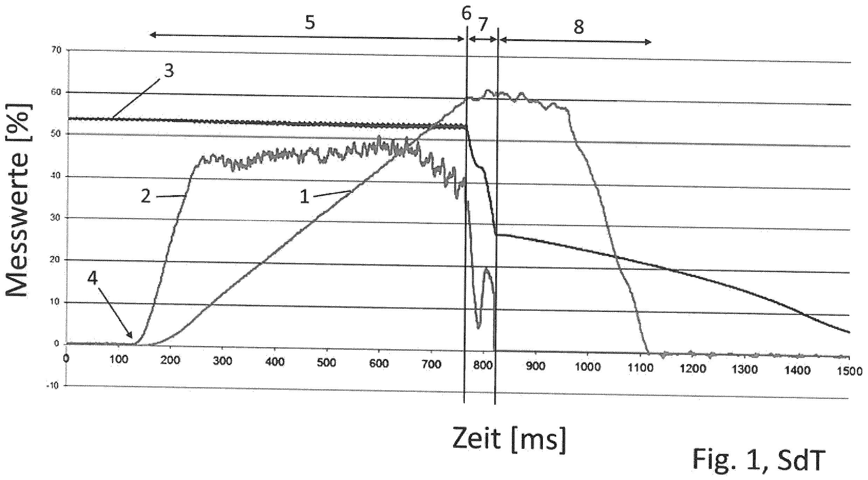

Die Fig. 1 bis 3 zeigen jeweils die Verläufe der Antriebsgeschwindigkeit 1, des Antriebsmoments 2 und der Zwischenkreisspannung 3 eines Lagerbediengeräts.

Im Fall der Fig. 1 handelt es sich um ein beispielhaftes Lagerbediengerät nach dem Stand der Technik, das auf konventionelle Weise stillgesetzt bzw. abgebremst wird. Zu Beginn der Messung zeigt die Spannung im Zwischenkreis den für den störungsfreien Netzbetrieb typischen Wert. Zu Beginn des in Fig. 1 dargestellten Netzausfallversuchs ab dem Startzeitpunkt 4 durchläuft der Antrieb eine Beschleunigungsphase 5, in der die Antriebsgeschwindigkeit 1 bei weiterhin konstant bleibender Zwischenkreisspannung 3 ansteigt. Das Antriebsmoment 2 steigt zunächst ebenfalls an, um nach kurzer Zeit einen im Rahmen technisch bedingter Schwankungen weitgehend konstanten Wert zu erreichen.

Zum Zeitpunkt des Netzausfalls 6 ändert sich der Verlauf aller drei gemessener Parameter signifikant. Während des Zeitraums der kurzen Phase 7 unmittelbar nach dem Zeitpunkt des Netzausfalls fällt die Zwischenkreisspannung 3 infolge der Entleerung des Zwischenkreises auf einen Restspannungswert ab. Nach diesem abrupten Spannungsabfall kann vom Zwischenkreis praktisch keine Energie mehr in den Antrieb gespeist werden, was sich darin äußert, dass das Antriebsmoment 2 während der Netzausfallphase 7 auf Null abfällt. Die Bewegungsgeschwindigkeit des Antriebs steigt nach dem Netzausfall nicht weiter an, sondern bleibt im gezeigten Beispiel im Rahmen von Messgenauig-keitsschwankungen zunächst noch annähernd konstant. Dies liegt an der Trägheit des in Bewegung befindlichen mechanischen Systems.

An die Netzausfallphase 7 schließt sich die Bremsphase 8 an. In dieser wirkt kein messbares Antriebsmoment 2 mehr. Die Zwischenkreisspannung 3 baut sich ausgehend von einem für die Speisung des Antriebs nicht mehr ausreichenden Restspannungswert allmählich weiter ab. Die Antriebsgeschwindigkeit 1 bleibt zunächst aufgrund der Trägheit zunächst noch weiter relativ konstant, bis die Bremse des Lagerbediengeräts, die aufgrund des nach herkömmlichen Methoden detektierten Netzausfalls aktiviert worden ist, schließt und durch die einsetzende Bremswirkung einen vergleichsweise steilen Abfall der Antriebsgeschwindigkeit 1 auf Null bewirkt. Im gezeigten Beispiel vergehen vom Einsetzen der Bremswirkung bis zum Still-stand des Antriebs ca. 150 ms.

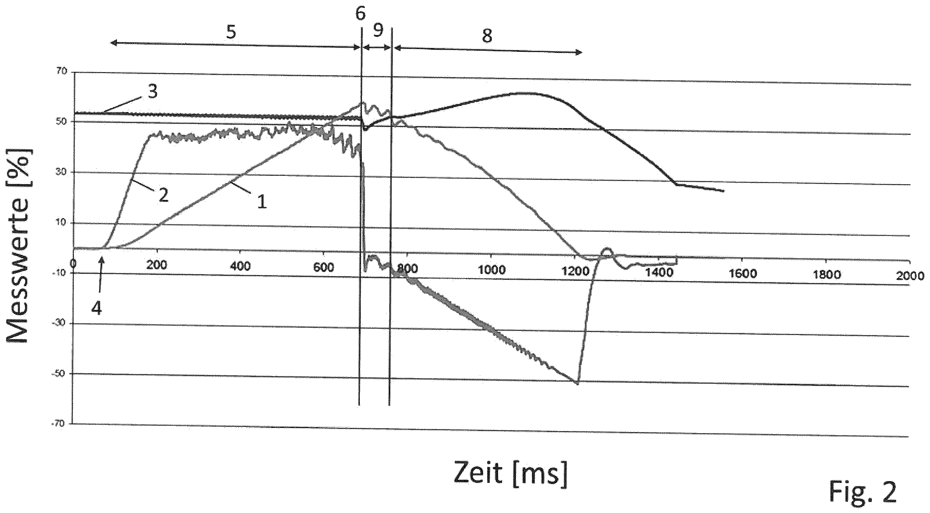

In Fig. 2 sind die entsprechenden Parameterverläufe für einen Netzausfallversuch mit einem erfindungsgemäßen Lagerbediengerät dargestellt. Bei dem in Fig. 2 wiedergegebenen Netzausfallversuch kommt das erfindungsgemäße Verfahren zur Steuerung des Lagerbediengeräts zum Einsatz. Der Verlauf der drei gemessenen Parameter Antriebsgeschwindigkeit 1, Antriebsmoment 2 und Zwischenkreisspannung 3 nach dem Startzeitpunkt 4, d.h. dem Zeitpunkt des Starten des Antriebs, entspricht zumindest im Wesentlichen den in Fig. 1 dargestellten Verläufen der Parameterwerte. Ab dem Zeitpunkt des Netzausfalls 6 verhalten sich die gemessenen Parameter jedoch völlig anders als es bei dem in Fig. 1 gezeigten Stand der Technik der Fall ist.

An den Zeitpunkt des Netzausfalls 6 schließt sich im gezeigten Beispiel eine Reaktionsphase 9 an. In dieser Reaktionsphase bewirkt die Steuereinrichtung beim Erkennen des Netzausfalls in vorteilhafter Weise eine Umsteuerung des Antriebs. Diese wird im gezeigten Beispiel in vorteilhafter Weise dadurch bewirkt, dass das Antriebsmoment 2 zunächst auf einen Vorsteuerwert von Null gesetzt und der Antrieb von einer motorischen in eine generatorische Betriebsphase umgesteuert wird. Das generatorische Antriebsmoment 2 - in Fig. 2 erkennbar durch das negative Vorzeichen - wird anschließend im gezeigten Beispiel in Gestalt einer Rampe gesteigert.

Durch das schnelle Umsteuern des Antriebs in die generatorische Betriebsweise fällt die Zwischenkreisspannung 3 lediglich minimal ab, bevor sie durch die vom Antrieb zurückgespeiste Energie wieder stabilisiert wird. Ab dem Moment des Umsteuerns beginnt infolgedessen eine Phase des stetigen Rückgangs der Antriebsgeschwindigkeit 1. Die Zwischenkreisspannung 3 wird in dieser Phase durch die vom generatorisch betriebenen Antrieb zurückgespeiste elektrische Energie aufrechterhalten. Im gezeigten Beispiel wird hierbei sogar eine Zwischenkreisspannung 3 über dem Niveau der Zwischenkreisspannung 3 im Netzbetrieb erreicht.

Die Antriebsgeschwindigkeit 1 des Antriebs beginnt so bereits unmittelbar nach dem Zeitpunkt des Netzausfalls zu sinken. Im gezeigten Beispiel reduziert sich die Antriebsgeschwindigkeit 1 und damit die Bewegungsgeschwindigkeit des Lagerbediengeräts über einen Zeitraum von ca. 500 ms auf Null. Auf diese Weise wird ein signifikant sanfteres Stillsetzen des Lagerbediengeräts erreicht als nach dem in Fig. 1 dargestellten Stand der Technik.

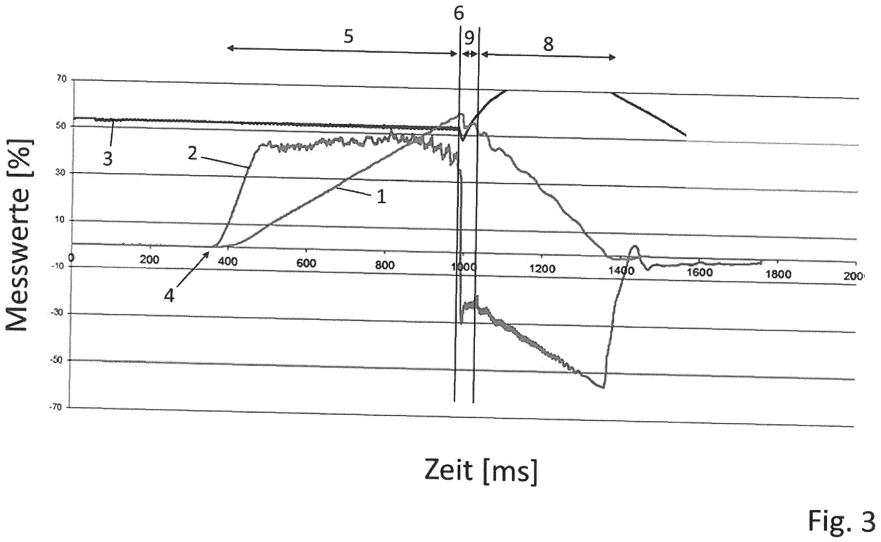

Im Fall der in Fig. 3 dargestellten weiteren vorteilhaften Ausführungsform findet das zu Fig. 2 beschriebene Verfahren in einer vorteilhaften Variante Anwendung, in der das Umsteuern in vorteilhafter Weise durch die Einstellung eines vorgegebenen Vorsteuerwerts für das Antriebsmoment erfolgt, der bereits einem definierten Bremsmoment im generatorischen Betrieb des Antriebs entspricht. In Fig. 3 ist dies daran zu erkennen, dass das Antriebsmoment 2 unmittelbar nach dem Zeitpunkt des Netzausfalls 6 für einen sehr kurzen Zeitraum auf einen überhöhten Vorsteuerwert von -30 % eingestellt wird, der bereits einem signifikanten Bremsmoment entspricht.

Unmittelbar danach wird das nun generatorische bzw. bremsende Antriebsmoment 2 dann im gezeigten Beispiel auf den Startwert einer Rampe eingestellt. Dieser Startwert entspricht einem niedrigeren Bremsmoment als der überhöhte Vorsteuerwert. Danach wird das Bremsmoment - ähnlich wie zu Fig. 2 beschrieben - wieder bis zum Stillstand des Antriebs bzw. des Lagerbediengeräts gesteigert.

In diesem Fall kommt das Lagerbediengerät in einem Zeitraum von ca. 400 ms zum Stillstand, d.h. die Dauer des Verzögerungsvorgangs wird durch den kurzzeitig überhöhten Vorsteuerwert (und den resultierenden Drehmoment-Boost) aufgrund des schnelleren Umkommutierens verkürzt. Gleichzeitig wird vor Allem zu Beginn des generatorischen Bremsvorgangs unmittelbar nach dem Zeitpunkt des Netzausfalls 6, also bereits zu Beginn der Reaktionsphase, mehr elektrische Energie vom Antrieb in den Zwischenkreis zurückgespeist als im Fall der in Fig. 2 dargestellten Verfahrensvariante.

### Bezugszeichenliste:

- 1: Antriebsgeschwindigkeit
- 2: Antriebsmoment
- 3: Zwischenkreisspannung
- 4: Startzeitpunkt
- 5: Beschleunigungsphase
- 6: Zeitpunkt des Netzausfalls
- 7: Phase unmittelar nach Netzausfall
- 8: Bremsphase
- 9: Reaktionsphase

## Patentansprüche

1. Lagerbediengerät mit einem Antrieb, der über einen Umrichter mit elektrischer Energie aus einem Energieversorgungsnetz versorgt wird, wobei der Umrichter einen elektrischen Zwischenkreis aufweist, wobei das Lagerbediengerät eine Steuereinrichtung aufweist, die dazu ausgebildet ist, einen Netzausfall zu erkennen und auf diesen zu reagieren,
**dadurch gekennzeichnet,**
**dass** die Steuereinrichtung zum Erkennen eines Netzausfalls des Energieversorgungsnetzes Mittel zur Überwachung der Zwischenkreisspannung (3) in dem Zwischenkreis aufweist,
wobei die Steuereinrichtung beim Erkennen eines Netzausfalls das Lagerbediengerät in eine generatorische Betriebsphase des Antriebs umsteuert, wobei das Umsteuern durch Einstellung eines vorgegebenen Vorsteuerwertes für das Antriebsmoment erfolgt.

2. Lagerbediengerät nach Anspruch 1,
**dadurch gekennzeichnet,**
**dass** das Lagerbediengerät eine aus dem Zwischenkreis gespeiste Energieversorgungseinrichtung, insbesondere ein Weitbereichsnetzteil, zur Versorgung der Steuereinrichtung und/oder einer elektromechanischen Bremse des Lagerbediengerätes mit elektrischer Energie aufweist.

3. Verfahren zur Steuerung eines Lagerbediengeräts, insbesondere eines Lagerbediengeräts nach einem der vorigen Ansprüche, wobei eine Steuereinrichtung Netzausfälle während des Betriebs des Lagerbediengeräts erkennt und auf diese reagiert,
**dadurch gekennzeichnet,**
**dass** die Steuereinrichtung die Zwischenkreisspannung (3) eines Zwischenkreises eines Umrichters überwacht und zur Erkennung von Netzausfällen nutzt, wobei die Steuereinrichtung beim Erkennen eines Netzausfalls, insbesondere während einer Betriebsphase, in der der Antrieb elektrische Energie in mechanische Energie umwandelt, das Lagerbediengerät in eine Betriebsphase, in der der Antrieb mechanische Energie in elektrische Energie umwandelt, umsteuert und das Umsteuern, insbesondere unter Umgehung einer Drehzahlregelung, durch Einstellung eines vorgegebenen, insbesondere von der Steuereinrichtung aus einem Datenspeicher abrufbaren, Vorsteuerwerts für das Antriebsmoment erfolgt, insbesondere wobei kurzzeitig ein überhöhter Wert eingestellt wird, der anschließend wieder abgesenkt wird.

4. Verfahren nach Anspruch 3,
**dadurch gekennzeichnet,**
**dass** zur Erkennung eines Netzausfalls die Unterschreitung eines Schwellenwertes durch die, insbesondere ungeglättete, Zwischenkreisspannung (3) genutzt wird.

5. Verfahren nach Anspruch 4,
**dadurch gekennzeichnet,**
**dass** die Höhe des Schwellenwertes während des Betriebs des Lagerbediengeräts aus einer Referenzspannung gebildet wird, die aus der geglätteten Zwischenkreisspannung (3) gewonnen wird.

6. Verfahren nach Anspruch 5,
**dadurch gekennzeichnet,**
**dass** der Wert der Referenzspannung auf eine obere Grenzreferenzspannung begrenzt wird.

7. Verfahren nach einem der Ansprüche 3 bis 6,
**dadurch gekennzeichnet,**
**dass** die Steuereinrichtung beim Erkennen während einer und/oder nach dem Umsteuern in eine Betriebsphase, in der der Antrieb mechanische Energie in elektrische Energie umwandelt, das Abbremsen der Bewegung des Lagerbediengeräts durch den Antrieb, vorzugsweise mit einem zeitabhängig ansteigenden Antriebsmoment, herbeiführt.

8. Verfahren nach einem der Ansprüche 3 bis 7,
**dadurch gekennzeichnet,**
**dass** die Steuereinrichtung nach dem Erkennen eines Netzausfalls eine Bremse des Lagerbediengeräts aktiviert, sobald eine vorgebbare Grenzgeschwindigkeit des Lagerbediengeräts unterschritten wird.

## Claims

1. Storage operating device with a drive which is supplied with electrical energy from a power supply network via an inverter, wherein the inverter has an electrical intermediate circuit, wherein the storage operating device has a control device which is designed to detect and react to a power failure,
**characterized in that**
to detect a power failure of the power supply network the control device has means for monitoring the intermediate circuit voltage (3) in the intermediate circuit,
wherein when a power failure is detected the control device switches the storage operating device into a generating operating phase of the drive, wherein the switching is effected by setting a predefined pilot control value for the drive torque.

2. Storage operating device according to claim 1,
**characterized in that**
the storage operating device has a power supply device fed from the intermediate circuit, in particular a wide-range power supply, for supplying the control device and/or an electromechanical brake of the storage operating device with electrical energy.

3. Method for controlling a storage operating device, in particular a storage operating device according to one of the preceding claims, wherein a control device detects power failures during the operation of the storage operating device and reacts to them,
**characterized in that**
the control device monitors the intermediate circuit voltage (3) of an intermediate circuit of an inverter and uses it to detect power failures, wherein when a power failure is detected, in particular during an operating phase in which the drive converts electrical energy into mechanical energy, the control device switches the storage operating device into an operating phase in which the drive converts mechanical energy into electrical energy, and the switching, in particular bypassing a rotation speed control, is effected by setting a predefined pilot control value, which can in particular be retrieved from a data memory by the control device, for the drive torque, in particular wherein an excessive value is set for a short time, and is then lowered again.

4. Method according to claim 3,
**characterized in that**
the, in particular non-smoothed, intermediate circuit voltage (3) dropping below a threshold value is used to detect a power failure.

5. Method according to claim 4,
**characterized in that**
the level of the threshold value is formed during the operation of the storage operating device from a reference voltage which is obtained from the smoothed intermediate circuit voltage (3).

6. Method according to claim 5,
**characterized in that**
the value of the reference voltage is limited to an upper limit reference voltage.

7. Method according to one of claims 3 to 6,
**characterized in that**
in the case of detection during and/or after the switching into an operating phase in which the drive converts mechanical energy into electrical energy the control device slows down the movement of the storage operating device by the drive, preferably with a drive torque that increases in a time-dependent manner.

8. Method according to one of claims 3 to 7,
**characterized in that**
after a power failure has been detected the control device activates a brake of the storage operating device as soon as the speed of the storage operating device drops below a predefinable limit speed.

## Revendications

1. Transstockeur avec un entraînement qui est alimenté en énergie électrique à partir d'un réseau d'alimentation en énergie par un convertisseur, dans lequel le convertisseur comporte un circuit intermédiaire électrique, dans lequel le transstockeur comporte un dispositif de commande qui est conçu pour détecter une panne de courant et de réagir à celle-ci,
**caractérisé en ce**
**que** le dispositif de commande pour la détection d'une panne de courant du réseau d'alimentation en énergie comporte des moyens pour surveiller la tension du circuit intermédiaire (3) dans le circuit intermédiaire,
dans lequel le dispositif de commande, lors de la détection d'une panne de courant, change le transstockeur en une phase opérationnelle en générateur de l'entraînement, dans lequel le changement est effectué par ajustement d'une valeur pilote prédéfinie pour le couple d'entraînement.

2. Transstockeur selon la revendication 1,
**caractérisé en ce**
**que** le transstockeur comporte un dispositif d'alimentation en énergie alimenté par le circuit intermédiaire, surtout un bloc d'alimentation électrique à plage étendue, pour alimenter le dispositif de commande et/ou un frein électromécanique du transstockeur en énergie électrique.

3. Procédé pour la commande d'un transstockeur, surtout d'un transstockeur selon l'une quelconque des revendications précédentes, dans lequel un dispositif de commande détecte des pannes de courant pendant le fonctionnement du transstockeur et réagit à celles-ci,
**caractérisé en ce**
**que** le dispositif de commande surveille la tension du circuit intermédiaire (3) d'un convertisseur et l'utilise pour détecter des pannes de courant, dans lequel le dispositif de commande, lors de la détection d'une panne de courant, surtout pendant une phase opérationnelle, dans laquelle l'entraînement convertit l'énergie électrique en énergie mécanique, change le transstockeur en une phase opérationnelle, dans laquelle l'entraînement convertit l'énergie mécanique en énergie électrique, et le changement, surtout en contournant un contrôle de vitesse, est effectué par l'ajustement d'une valeur pilote prédéfinie, surtout accessible par le dispositif de commande à partir d'un stockage de donnée, pour le couple d'entraînement, surtout, dans lequel, temporairement, une valeur surélevée est ajustée qui est diminuée ultérieurement.

4. Procédé selon la revendication 3,
**caractérisé en ce**
**que**, pour la détection d'une panne de courant, la tension du circuit intermédiaire (3), surtout la tension du circuit intermédiaire (3) non lissée, utilise le fait qu'une valeur seuil n'est pas atteinte.

5. Procédé selon la revendication 4,
**caractérisé en ce**
**que** la hauteur de la valeur seuil pendant le fonctionnement du transstockeur est formée d'une tension de référence qui est obtenue à partir de la tension du circuit intermédiaire (3) lissée.

6. Procédé selon la revendication 5,
**caractérisé en ce**
**que** la valeur de la tension de référence est limitée à une tension de référence limite supérieure.

7. Procédé selon l'une quelconque des revendications 3 à 6,
**caractérisé en ce**
**que** le dispositif de commande, lors de la détection pendant une phase opérationnelle et/ou après le changement en une phase opérationnelle, dans lequel l'entraînement convertit l'énergie mécanique en énergie électrique, provoque le freinage du mouvement du transstockeur par l'entraînement, de préférence avec un couple d'entraînement augmentant en fonction du temps.

8. Procédé selon l'une quelconque des revendications 3 à 7,
**caractérisé en ce**
**que** le dispositif de commande, après la détection d'une panne de courant, active un frein du transstockeur dès qu'une vitesse limite prédéfinissable du transstockeur est inférieure à la valeur donnée.
